# EUROPEAN PATENT APPLICATION

(11) **EP 2 481 926 A1**
(43) Date of publication of application: **01.08.2012**
(21) Application number: 12152498.7
(22) Date of filing: 25.01.2012
(51) Int. Cl.: F03D 11/00, F03D 7/02

(54) **Phase change method and phase change jig for a blade bearing**

(30) Priority: 27.01.2011 JP 2011014995
(71) Applicant: Fuji Jukogyo Kabushiki Kaisha, Tokyo 160-8316 (JP)
(72) Inventor: Tobinaga, Ikuo, Tokyo, 160-8316 (JP)
(74) Representative: Sajda, Wolf E.

(57) **Abstract**

There are provided a phase change method and phase change jig for changing the phase of a blade bearing. The phase change method for a blade bearing (30), which has a race (31) on the hub side that is fastened to the hub (20) of a wind power generator and a race (32) on the blade side that is fastened to the blade (10), is a method for changing the phase of the race on the blade side of the blade bearing (30) with respect to the blade (10). When a blade (10) is hanging downward, first jigs (110) having spring elements that can expand under the weight of the blade and second jigs (120) having jack mechanisms that are capable of separating the hub (20) and blade (10) are used to separate the blade (10) and the race on the blade side, and the race on the blade side is rotated relative to the blade (10).

## Description

### FIELD OF THE INVENTION

The present invention relates to a phase change method and phase change jig for changing the phase between the races of a blade bearing that supports a blade of a wind-power generator wherein the blade can rotate with respect to the hub, and more particularly to a phase change method and phase change jig that enable said change of the phase by a simple process.

### BACKGROUND OF THE INVENTION

A wind-power generator has a nacelle that is supported at a high place by a tower that stands upward from the surface of the ground or the like; a generator is housed inside that nacelle and power is generated by rotating and driving that generator by a rotor, which in this case is a wind turbine.

The rotor comprises a plurality of blades, which are arranged in a radial shape and function as airfoils for receiving the wind and generating lift, and a hub, which functions as the base section of the blades and is connected to the main shaft of the generator.

The rotor is constructed such that the pitch angle of the blades can be changed according to the operating state of the wind-power generator.

In order for this, the blades are supported by the hub by way of blade bearings such that the blades can rotate.

Moreover, in order to control the pitch mentioned above, the rotor also has a driving mechanism that rotates the blades with respect to the hub.

An example of a blade bearing and driving mechanism has been proposed wherein one race of the blade bearing is fastened to the hub and the other race is fastened to the blade, and a ring gear for driving the pitch is formed in the race on the blade side.

Moreover, technology related to a blade pitch driving mechanism for a wind-power generator has been disclosed in Japanese Patent No. 4 229 764, wherein, in a pitch-angle control apparatus for rotating respectively a plurality of wind turbine blades, a reduction gear is provided on one side of a cover that encloses a transmission method, and a main motor and the like are provided on the other end, in order to improve workability when performing repair work on a part which becomes broken.

Japanese Laid-open Patent Application Publication JP-A-2007-013 875 discloses a pitch driving mechanism having a support member that holds a blade such that the blade does not rotate when performing maintenance of the output shaft gear that drives a ring gear that is provided on the blade.

Furthermore, Japanese Laid-open Patent Application Publication JP-A-2009-516 118 discloses technology for forming a gear segment on only part of the area on the perimeter of a bearing ring in order to lower the cost for manufacturing the gear segment that is formed around the bearing ring of the blade bearing.

In a pitch driving mechanism that drives a gear that is formed on the race of a blade bearing that is on the blade side, typically the pitch angles that are frequently used are limited within a specified range. Therefore, even when the gear is formed around the entire race, the portion that actually receives the load is limited.

Consequently, even when part of the ring gear is damaged, by separating the ring gear and the race from the blade and shifting the pitch with respect to the blade, it is possible to continue operation with no problem, so the ring gear can be used to the maximum limit of the life of the part.

However, conventionally, in order to rotate the race of the blade bearing on the blade side with respect to the blade, it was necessary to use heavy equipment such as a crane to lower the blade to the ground before performing the work, it needs a troublesome process, and also it requires a large cost.

### SUMMARY OF THE INVENTION

In consideration of the background described above, the object of the present invention is to provide a phase change method and phase change jig for changing the phase of a blade bearing whereby the phase of the race of the blade bearing on the blade side can be changed with respect to the blade by a simple process.

According to a first aspect of the present invention for achieving the purpose described above, there is provided
a method applied to a wind power generator, wherein
the wind power generator comprises:
a power generator main body supported at a top end section of a tower;
a hub rotatably supported by the power generator main body;
a blade having a proximal end portion and a distal end portion, and extending from the hub in a radial direction of the hub;
a blade bearing, having a hub side race fixed to the hub and a blade side race fixed to the proximal end portion of the blade, for rotatably supporting the blade relative to the hub; and
a pitch driving mechanism having a ring gear formed on the blade side race, and a driving gear engaging with the ring gear for driving the ring gear,
the method comprising the steps of:
   (a) mounting a first jig and a second jig on a connecting section where the proximal end portion of the blade and the hub are connected via the blade bearing, the first jig, having a spring element extendable in the extending direction of the blade, for connecting the proximal end portion of the blade and the hub, and the second jig having a jack mechanism for applying to the proximal end portion of the blade a force which is directed to a direction away from the hub in the extending direction of the blade;
   (b) unfixing the proximal end portion of the blade and the blade side race when the blade is located above the hub;
   (c) rotating the hub such that the blade is hanging downward and the spring element of the first jig extends so that a space is formed partially between the proximal end portion of the blade and the blade side race;
   (d) separating after the step (c) the proximal end portion of the blade and the blade side race, using the jack mechanism of the second jig which is arranged near an area where the proximal end portion and the blade side race contact with each other; and
   (e) rotating the blade side race with respect to the proximal end portion of the blade.

According to a further embodiment of the method according to the present invention for achieving the above purpose, it is preferable that
a rotational axis of the hub is tilted so that the rotational axis is higher on a side that is farther away from the power generator main body;
the blade is inclined to a direction which goes away from the tower with respect to an imaginary plane which is perpendicular to the rotational axis of the hub such that a position of the distal end portion of the blade is farther from the tower than a position of the proximal end portion of the blade; and
the second jig is mounted on a side of the power generator main body in the connecting section in the step (a).

According to another embodiment of the method according to the present invention for achieving the above purpose, it is preferable that
the hub side race of the blade bearing is fixed to the hub using a fastening member; and
the first jig and the second jig are fixed to the hub side race by the fastening member in the step (a).

According to a second aspect of the present invention for achieving the above purpose, there is provided
a phase change jig used for a wind power generator, wherein
the wind power generator comprises:
a power generator main body supported at a top end section of a tower;
a hub rotatably supported by the power generator main body;
a blade having a proximal end portion and a distal end portion, and extending from the hub in a radial direction of the hub;
a blade bearing, having a hub side race fixed to the hub and a blade side race fixed to the proximal end portion of the blade, for rotatably supporting the blade relative to the hub; and
a pitch driving mechanism having a ring gear formed on the blade side race, and a driving gear engaging with the ring gear for driving the ring gear,
the jig comprising:
a first jig adapted to be mounted on a connection section where the proximal end portion of the blade and the hub are connected via the blade bearing, the first jig, having a spring element extendable in the extending direction of the blade, for connecting the proximal end portion of the blade and the hub; and
a second jig adapted to be mounted on the connecting section together with the first jig, wherein
the spring element of the first jig is configured to extend so that a space is formed partially between the proximal end portion of the blade and the blade side race when the proximal end portion of the blade and the blade side race is unfixed and the hub is rotated to a predetermined rotation position so that the blade is hanging downward; and
the second jig is configured to apply to the proximal end portion of the blade a force which is directed to a direction away from the hub in the extending direction of the blade so that the proximal end portion of the blade and the blade side race is separated when the spring element of the first jig is being extended.

According to a further embodiment of the jig according to the present invention for achieving the above purpose, it is preferable that
a rotational axis of the hub is tilted so that the rotational axis is higher on a side that is farther away from the power generator main body;
the blade is inclined to a direction which goes away from the tower with respect to an imaginary plane which is perpendicular to the rotational axis of the hub such that a position of the distal end portion of the blade is farther from the tower than a position of the proximal end portion of the blade; and
the second jig is configured to be mounted a side of the power generator main body in the connecting section.

According to a further embodiment of the jig according to the present invention for achieving the above purpose, it is preferable that
the hub side race of the blade bearing is fixed to the hub using a fastening member; and
the first jig and the second jig are configured to be fixed to the hub side race by the fastening member.

In the present invention, with a blade hanging downward, in the area where the hub and the blade separate under the weight of the blade itself, a space between the hub and the blade is formed by the first jig having the spring element, and in the area where the hub and blade come together under the weight of the blade, the second jig having the jack mechanisms forcibly separate the hub and blade. As a result, the blade can be supported such that the blade can be separated from the rotating member.

In this state, by rotating the rotating member with relative to the blade and changing the phase, it is possible to change the phase of the blade bearing by a simple process without having to lower the blade using heavy equipment such as a crane.

Other features and advantages of the present invention will become apparent from the following detailed description, taken in conjunction with the accompanying drawings, which illustrate, by way of example, the principles of the invention.

### BRIEF DESCRIPTION OF THE DRAWINGS

- FIG. 1: is a drawing illustrating the area around the hub section of a wind power generator that is the target for implementing the blade bearing phase change method of the present invention, and in which the blade bearing phase change jigs of the present invention are mounted.
- FIG. 2: is an enlarged view of area II in FIG. 1.
- FIG. 3: is a drawing illustrating the construction of a spring jig of an embodiment of the present invention.
- FIG. 4: is a drawing illustrating the construction of a jack jig of an embodiment of the present invention.
- FIG. 5: is a drawing illustrating the process of the blade bearing phase change method of an embodiment of the present invention, and illustrates the state wherein a blade is arranged above the hub, and spring jigs and jack jigs have been mounted.
- FIG. 6: is a drawing illustrating the arrangement of the spring jigs and jack jigs in an embodiment of the present invention, and corresponds to a view as seen in the direction of the arrows VI-VI in FIG. 1.
- FIG. 7: is a drawing illustrating the process of the blade bearing phase change method of an embodiment of the present invention, and illustrates the state wherein the bolts fastening the inner race of the blade bearing to the blade have been removed.
- FIG. 8: is a drawing illustrating the process of the blade bearing phase change method of an embodiment of the present invention, and illustrates the state immediately after the hub has been rotated so that the blade is dropped down.
- FIG. 9: is a drawing illustrating the process of the blade bearing phase change method of an embodiment of the present invention, and illustrates the state wherein the blade and inner race are separated by the jack jigs, and the inner race is driven so as to rotate.

### DETAILED DESCRIPTION OF THE INVENTION

The object of the present invention is to provide a phase change method and phase change jigs for changing the phase of a blade bearing whereby the phase of the race of the blade bearing on the blade side can be changed with respect to the blade by a simple process.

In order to accomplish this, spring jigs having spring elements, and jack jigs having jack mechanisms are mounted between the hub and blade, and they are used to release the connection between the blade and the inner race of the bearing. After that, the blade is hung downward and the blade and inner race of the bearing are separated by the weight of the blade and the jack mechanisms, then in this state, the inner race is rotated relative to the blade.

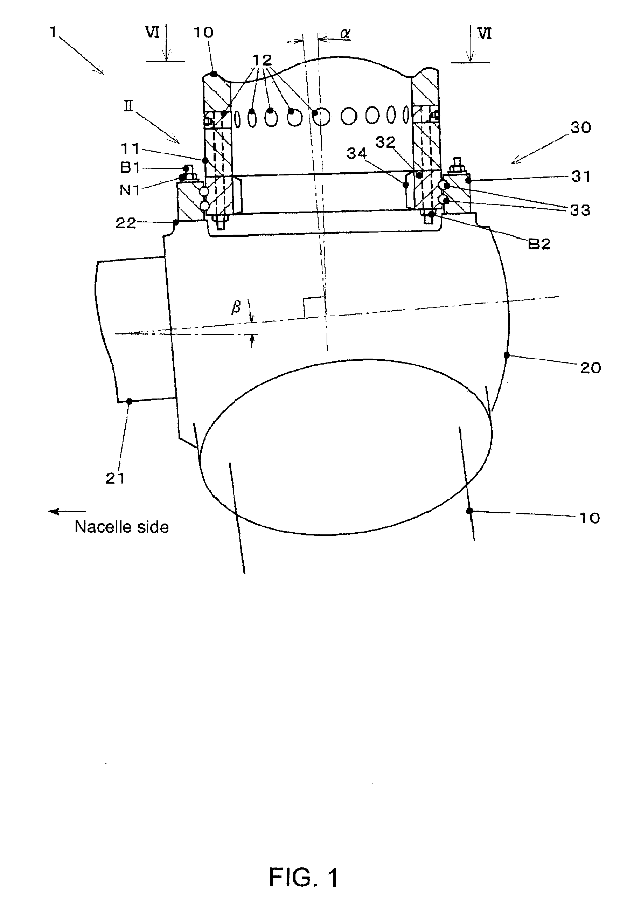

In the following, an embodiment of the blade bearing phase change method and phase change jigs of the present invention will be explained. FIG. 1 is a drawing illustrating the area around the hub section of a wind power generator that is the target of implementing the blade bearing phase change method of an embodiment of the present invention, and in which the blade bearing phase change jigs of the present invention are mounted.

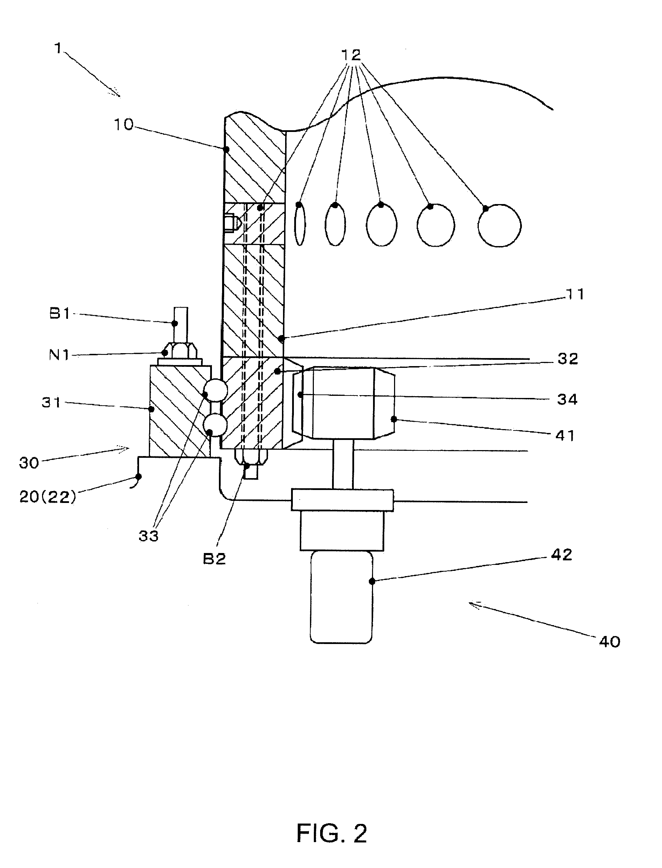

FIG. 2 is an enlarged view of area II in FIG. 1. This hub section is provided in the center section of the rotor of a wind power generator. In a wind power generator, a generator is located inside a nacelle that is supported in a high place by a tower that stands upward from the ground, bottom of the ocean or a floating body, and the rotor, which is the wind turbine of this wind power generator, rotates and drives the generator.

As illustrated in FIG. 1, rotor 1 comprises blades 10, a hub 20 and blade bearings 30. Moreover, as illustrated in FIG. 2, the rotor 1 comprises a pitch driving unit 40. The blades 10 are airfoils that generate torque in the rotor 1. The plurality of blades 10 are formed in a radiating shape from the center of the hub 20. The end section 11 of each blade 10 on the hub 20 side (blade root) is a hollow cylindrical shape.

Barrel nuts 12 that can be tightened on bolts from the outer circumferential surface of a blade 10 are provided on the outer circumferential section near the end section 11 of the blade 10. A plurality of barrel nuts 12 are evenly distributed in the circumferential direction around the end section 11 of the blade 10.

The hub 20 is located in the center section of the rotor 1, and is the base section to which the blades 10 are attached. The hub 20 is supported around a rotating shaft 21 that protrudes toward the nacelle side (not illustrated in the figure) such that the hub 20 can rotate. The rotating shaft 21 is connected to the main shaft of the generator (not illustrated in the figure), and transmits the torque of the rotor 1 to the generator.

Moreover, when necessary, a speed increasing gear may be provided between the hub 20 and the generator. Circular seats 22 to which the blade bearings 30 are attached, are formed for each blade 10 such that the seats 22 are evenly spaced in the circumferential direction around the circumferential surface of the hub 20.

Bolts B1 are provided on the seat 22 such that they protrude in the radial direction of the rotor 1, and these bolts B1 are used for fastening the blade bearing 30. A plurality of bolts B1 are evenly spaced in the circumferential direction of the seat 22.

The blade bearing 30 supports the blade 10 such that it can rotate with respect to the hub 20 in the direction of pitch angle change. The blade bearing 30, for example, is a multi-row deep-groove ball bearing having an outer race 31, inner race 32 and steel balls 33.

The outer race 31 is a circular ring shaped member having a rectangular cross-sectional shape when cut and seen in the circumferential direction, and has grooves formed around the inner circumferential surface that will be the track surfaces. The outer race 31 is fastened to the hub 20 by inserting the bolts B1 that protrude from the seat 22 into through holes that are formed in the axial direction, and screwing and tightening nuts N1 onto the bolts B1.

The inner race 32 is a circular ring shaped member that has a rectangular cross section when cut and seen in the circumferential direction, and has grooves formed around the outer circumferential surface that will be the track surface. The inner race 32 is placed concentrically on the inside diameter side of the outer race 31.

The inner race 32 is fastened to the blade 10 by inserting bolts B2 from the hub 20 side into through holes that are formed in the axial direction, and inserting the screw section of the bolts B2 into through holes that are formed in the end section 11 of the blade 10 and screwing the bolts B2 into the screw holes of barrel nuts 12.

The steel balls 33 are rolling bodies that are installed between the track surfaces of the outer race 31 and the track surfaces of the inner race 32. A ring gear 34, which is an internal gear that is driven by the pitch driving device 40, is formed around the inner circumferential surface of the inner race 32.

The pitch driving device 40 illustrated in FIG. 2 comprises a pinion gear 41 and an actuator unit 42. The pitch driving device 40 comprises a driving mechanism that, together with the ring gear 34, changes the pitch angle. The pinion gear 41 is a driving gear that engages with the ring gear 34 and drives the ring gear 34. The actuator unit 42 has a motor that rotates and drives the pinion gear 41 and a speed reduction mechanism.

The ring gear 34, in this embodiment, is provided in the inner race 32, and the pitch driving device 40 is located inside the hub 20, however, the ring gear can also be provided on the outer race side and the pitch driving mechanism can be located on the outside of the hub. In that case, the spring jigs and jack jigs are located inside the blade.

Moreover, as illustrated in FIG. 1, a cone angle α with respect to the direction orthogonal to the center axis of rotation of the rotor 1, is given to the blade 10 so that the protruding end section is moved in a direction away from nacelle and tower. Moreover, a tilt angle β is given to the center axis of rotation of the rotor 1 so that the far side from the nacelle is higher than the nacelle side.

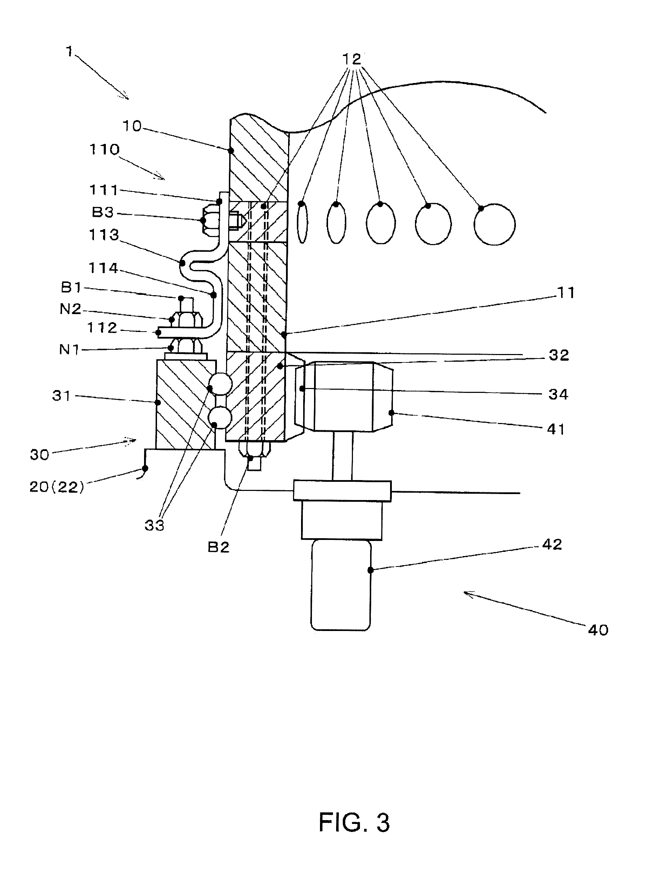

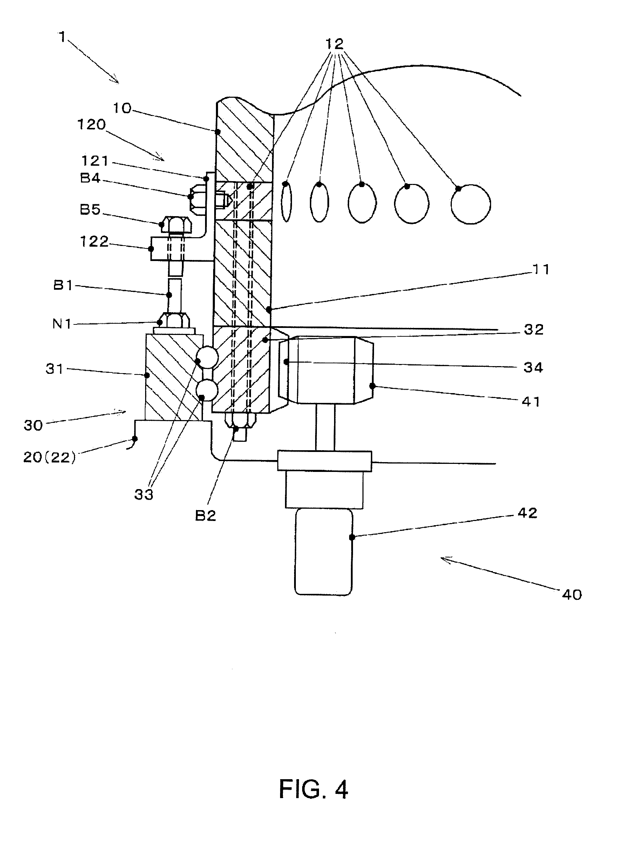

In the following, a method for changing the phase of the ring gear 34 by rotating the inner race 32 of the blade bearing with the blade 10 when part of the ring gear 34 becomes damaged, and the jigs for phase rotation that are used in this method are explained. In this embodiment, spring jigs 110 and jack jigs 120 that are explained below are used. FIG. 3 and FIG. 4 are drawings illustrating the construction of a spring jig 110 and a jack jig 120, and illustrate the mounted state in the cross section illustrated in FIG. 2.

The spring jig 110 that is illustrated in FIG. 3 has a fastening section 111 on the blade side, a fastening section 112 on the hub side, a spring section 113 and a connecting section 114. The fastening section 111 on the blade side is a flat plate shaped surface that is fastened to the outer surface of a blade 10. The fastening section 111 on the blade side has a bolt hole and is fastened to the blade 10 by inserting a bolt B3 through the bolt hole and screwing the bolt B3 into a nut 12.

The fastening section 112 on the hub side is a portion that is fastened to the hub 20 by way of the outer race 31 of the blade bearing 30. The fastening section 112 on the hub side is a flat plate shaped surface that extends in a direction that is orthogonal to the bolt B1. The fastening section 112 on the hub side has a bolt hole through which the bolt B1 is inserted. The fastening section 112 on the hub side is fastened by inserting the bolt B1 through the bolt hole and screwing the bolt into a nut N2. When doing this, the fastening section 112 on the hub side is located between the nut N1 and nut N2.

The spring section 113 is continuous with the fastening section 111 on the blade side, and is formed by bending a plate made of a material having elasticity into a U shape. This bent section is arranged such that it protrudes with respect to the fastening section 111 on the blade side toward the outside in the radial direction of the blade bearing 30.

The spring section 113, mainly by the bent section elastically deforming, allows expansion in the lengthwise direction and minute inclination of the blade 10 between the fasting section 111 on the blade side and the fastening section 112 on the hub side.

The connecting section 114 is a portion that connects the spring section 113 and the fastening section 112 on the hub side, and is formed of a flat shaped plate that extends along the outer surface of the blade 10. The fastening section 111 on the blade side, the fastening section 112 on the hub side, the spring section 112 and the connecting section 114 are integrated into one member by bending a strip shaped material having elasticity such as steel plate.

The jack jig illustrated in FIG. 4 has a fastening section 121 on the blade side and a jack section 122. The fastening section 121 on the blade side is a flat shaped surface that fastens to the outer surface of the blade 10. The fastening section 121 on the blade side has a bolt hole, and is fastened to the blade 10 by inserting a bolt B4 into the bolt hole and screwing the bolt B4 into a barrel nut 12.

The jack section 122 is a flat surface section that protrudes from the end section on the hub 20 side of the fastening section 121 on the blade side toward the outside in the radial direction of the blade bearing 30. The jack section 122 is located such that it faces the end surface of the blade bearing 30. A screw hole is formed in the jack section 122 and a bolt B5 is inserted into this screw hole from the outer diameter side of the rotor 1.

The protruding end section of the bolt 5 faces the protruding end section of the bolt B1. As the bolt B5 is tightened, the tip end section of bolt B5 presses against the protruding end section of bolt B1 and functions as a jack to forcibly separate the blade 10 from the seat 22 of the hub 20.

The fastening section 121 on the blade side and the jack section 122 can be formed as a single unit by mechanically processing a metal casting, for example, however, the material and manufacturing method are not particularly limited. Moreover, these can be formed as separate parts that are joined together. However, in the jack jig 120, when using the jack section 122 to separate the blade 10 and the outer race 31, sufficient rigidity is required such that these parts do not bend.

In the following, the method for using the spring jigs 110 and the jack jigs 120 above to change the phase of the inner race 32 of the blade bearing 30 will be explained in detail. First, the rotor 1 is rotated and the blade 10 that requires the phase of the inner race 32 to be changed is placed such that it is above the hub 20.

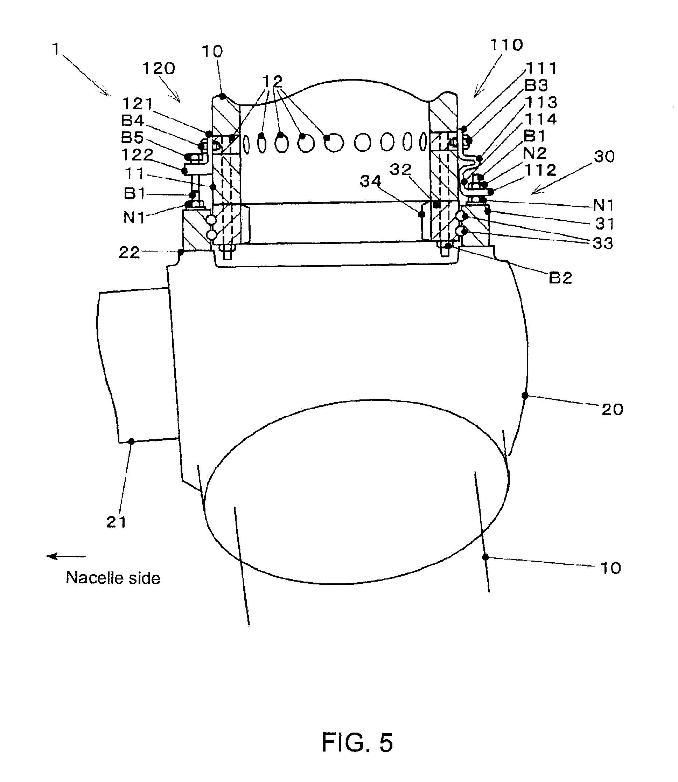

In this state, as illustrated in FIG. 5, a plurality of spring jigs 110 and a plurality of jack jigs 120 are mounted between the barrel nuts 12 of the blade 10 and the outer race 31 of the blade bearing 30. When doing this, the protruding tip end sections of the bolts B5 of the jack jigs 120 are separated from the bolts B1.

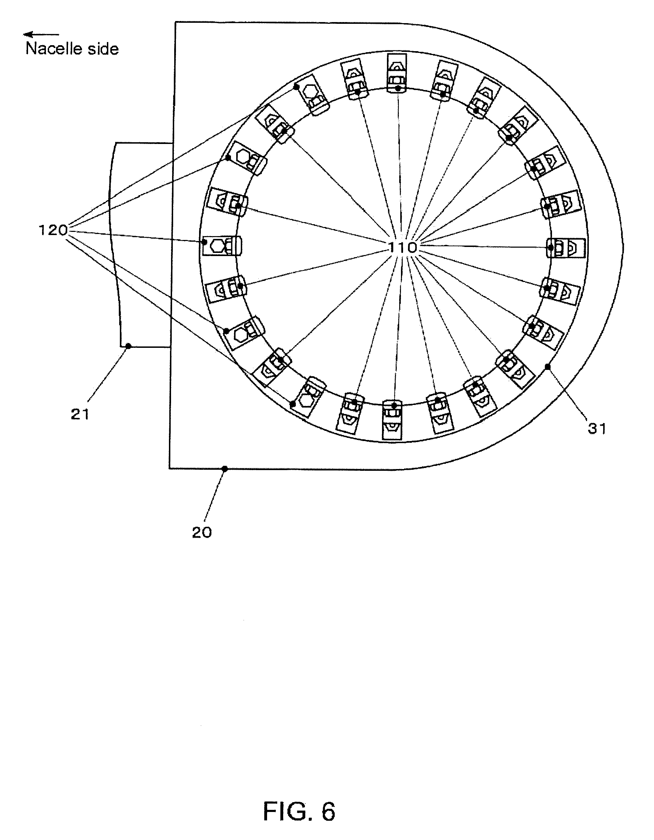

FIG. 6 is a drawing illustrating the arrangement of the spring jigs and jack jigs, and corresponds to the area VI-VI as seen in the direction of the arrow in FIG. 1. The jack jigs 120 are selectively arranged in areas on the nacelle side of the end section 11 of the blade. In the example illustrated in FIG. 6, the spring jigs 110 and jack jigs 120 are arranged at 24 locations around the perimeter, however, the jack jigs 120 are located at 5 locations, such that in the area on the nacelle side, the jack jigs 120 and spring jigs 110 are arranged every other one. Moreover, spring jigs 110 are mounted at all the other locations.

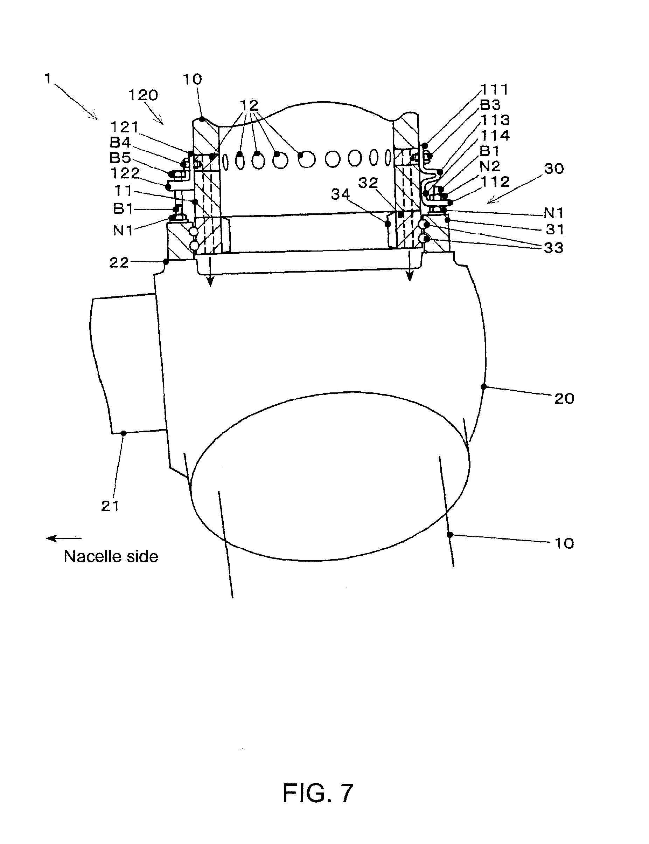

Next, as illustrated in FIG. 7, the bolts B2 that fasten the inner race 32 of the blade bearing 30 to the blade 10 are pulled out and removed.

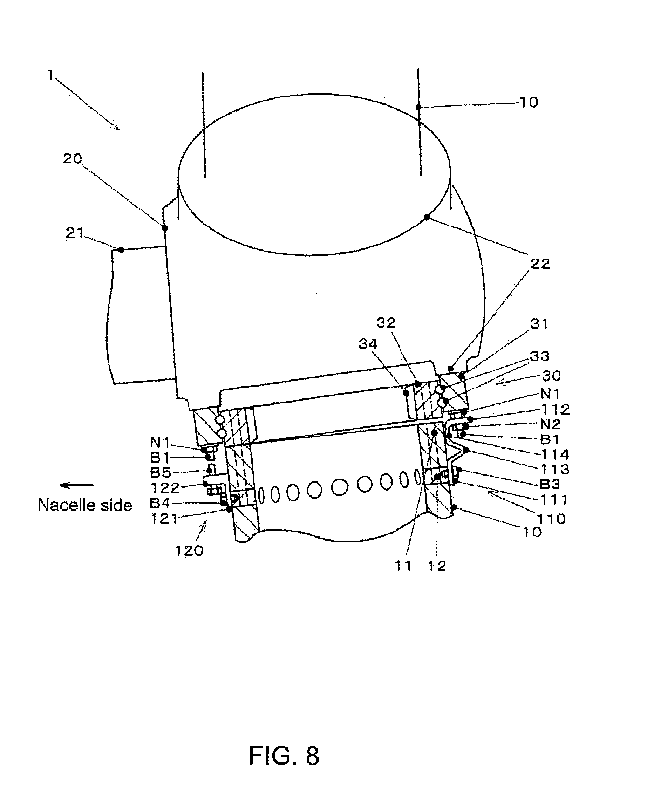

Then, as illustrated in FIG. 8, the rotor 1 is rotated so that the blade 10 is hanging downward. In this state, by suitably adjusting the spring constants of the spring sections 113 of the spring jigs 110, a moment, which occurs due to the effect of the offset in the position of the center of gravity of the blade 10 that is caused by the weight of the blade 10, the cone angle α and the tilt angle β, causes a space to occur between the blade 10 and the inner race 32 on the far side from the nacelle. On the other hand, on the side near the nacelle, the blade 10 and inner race 32 come in contact.

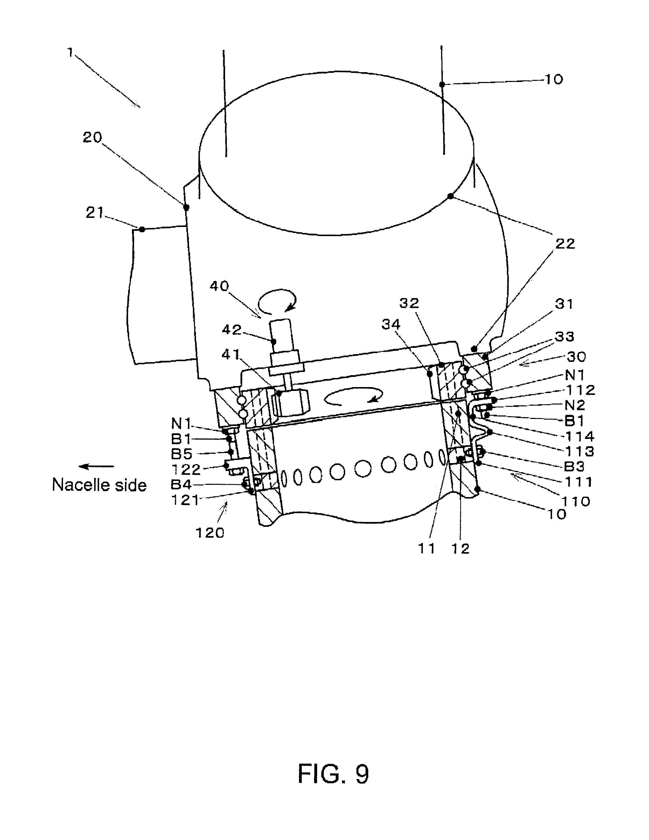

Next, as illustrated in FIG. 9, the bolts B5 of the jack jigs 120 are tightened, forcibly separating the blade 10 and the outer race 31. As a result, a space is formed all the way around between the end section 11 of the blade 10 and the inner race 32, such that these members are completely separated.

Moreover, relative rotation of the blade 10 with respect to the hub 20 is prevented by the jigs. In this state, the pitch driving device 40 causes the inner race 32 to rotate relative to the blade 10, making it possible to change the phase so that an undamaged portion of the ring gear 34 becomes the normal range.

After changing the phase of the inner race 32 with respect to the blade 10 to a specified phase, the inner race 32 is connected to the blade 10 by performing the procedure above in the reverse order, after which all of the jigs are removed and the phase change operation is finished.

With the embodiment explained above, when part of the ring gear that is formed around the inner race 32 of the blade bearing 30 is damaged, it is possible to rotate the inner race 32 with respect to the blade 10 and then fasten the inner race 32 again without having to lower the blade 10 using heavy equipment such as a crane. Therefore, by moving the an undamaged portion of the ring gear 34 to the normally used range, it is possible to continue using the inner race 32 and ring gear 34, and thus the life of the members can be extended.

### Variations

The present invention is not limited to the embodiment explained above, and various variations or changes are possible, with these also being within the technical scope of the present invention. For example, the shape, construction and the like of the jigs can be appropriately changed. For example, the spring jig 110 is not limited to an integrated form as in the embodiment above, and could comprise a spring element made using separate parts.

The spring element is also not limited to a plate spring. Moreover, the jack mechanism of the jack jig 120 is not limited to a screw type mechanism as in the embodiment above, and can be appropriately changed. Furthermore, the construction of the hub, blades and blade bearings that are the obj ect of application of the present invention are not limited to that of the embodiment described above.

It is to be understood that the above-described embodiment is illustrative of only a few of the many possible specific embodiments that can represent applications of the principles of the invention. Numerous and varied other arrangements can be readily devised by those skilled in the art without departing from scope of the invention.

### LIST OF REFERENCE SIGNS

- 1: = rotor
- 10: = blade
- 11: = end section
- 12: = barrel nuts
- 20: = hub
- 21: = rotating shaft
- 22: = circular seat
- 30: = blade bearing
- 31: = outer race
- 32: = inner race
- 33: = steel balls
- 34: = ring gear
- 40: = pitch driving device
- 41: = pinion gear
- 110: = spring jigs
- 111: = fastening section (blade side)
- 112: = fastening section (hub side)
- 113: = spring section
- 114: = connecting section
- 120: = jack jigs
- 121: = fastening section
- 122: = jack section
- B1-B5: = bolts
- N1-N2: = tightening nuts
- α: = cone angle
- β: = tilt angle

## Claims

1. A method applied to a wind power generator, wherein
- the wind power generator comprises:
- a power generator main body supported at a top end section of a tower;
- a hub (20) rotatably supported by the power generator main body;
- a blade (10) having a proximal end portion and a distal end portion, and extending from the hub (20) in a radial direction of the hub (20);
- a blade bearing (30), having a hub side race (31) fixed to the hub (20) and a blade side race (32) fixed to the proximal end portion of the blade, for rotatably supporting the blade (10) relative to the hub (20); and
- a pitch driving mechanism (40) having a ring gear (34) formed on the blade side race (32), and a driving gear (41) engaging with the ring gear (34) for driving the ring gear,
the method comprising the following steps:
(a) mounting a first jig (110) and a second jig (120) on a connecting section where the proximal end portion of the blade (10) and the hub (20) are connected via the blade bearing (30), the first jig (110), having a spring element (113) extendable in the extending direction of the blade (10), for connecting the proximal end portion of the blade (10) and the hub (20), and the second jig (120) having a jack mechanism (122) for applying to the proximal end portion of the blade (10) a force which is directed to a direction away from the hub (20) in the extending direction of the blade (10);
(b) unfixing the proximal end portion of the blade (10) and the blade side race (32) when the blade (10) is located above the hub (20);
(c) rotating the hub (20) such that the blade (10) is hanging downward and the spring element of the first jig (110) extends so that a space is formed partially between the proximal end portion of the blade (10) and the blade side race (32);
(d) separating after the step (c) the proximal end portion of the blade (10) and the blade side race (32), using the jack mechanism (122) of the second jig (120) which is arranged near an area where the proximal end portion and the blade side race contact with each other; and
(e) rotating the blade side race (32) with respect to the proximal end portion of the blade (10).

2. The method according to claim 1,
wherein the rotational axis of the hub (20) is tilted so that the rotational axis is higher on a side that is farther away from the power generator main body; wherein the blade (10) is inclined to a direction which goes away from the tower with respect to an imaginary plane which is perpendicular to the rotational axis of the hub (20) such that a position of the distal end portion of the blade (10) is farther from the tower than a position of the proximal end portion of the blade (10); and
wherein the second jig (120) is mounted on a side of the power generator main body in the connecting section in the step (a).

3. The method according to claim 1,
wherein the hub side race (31) of the blade bearing (30) is fixed to the hub (20) using a fastening member; and
wherein the first jig (110) and the second jig (120) are fixed to the hub side race (31) by the fastening member in the step (a).

4. A phase change jig used for a wind power generator, wherein
the wind power generator comprises:
- a power generator main body supported at a top end section of a tower;
- a hub (20) rotatably supported by the power generator main body;
- a blade (10) having a proximal end portion and a distal end portion, and extending from the hub (20) in a radial direction of the hub (20);
- a blade bearing (30), having a hub side race (31) fixed to the hub (20) and a blade side race (32) fixed to the proximal end portion of the blade (10), for rotatably supporting the blade (10) relative to the hub (20); and
- a pitch driving mechanism (40) having a ring gear (34) formed on the blade side race (32), and a driving gear (41) engaging with the ring gear (34) for driving the ring gear,
the jig further comprising:
a first jig (110) adapted to be mounted on a connection section where the proximal end portion of the blade (10) and the hub (20) are connected via the blade bearing, the first jig (110), having a spring element (113) extendable in the extending direction of the blade (10), for connecting the proximal end portion of the blade (10) and the hub (20); and
a second jig (120) adapted to be mounted on the connecting section together with the first jig (110),
wherein the spring element of the first jig (110) is configured to extend so that a space is formed partially between the proximal end portion of the blade (10) and the blade side race (32) when the proximal end portion of the blade (10) and the blade side race (32) is unfixed and the hub (20) is rotated to a predetermined rotation position so that the blade (10) is hanging downward;
and
wherein the second jig (120) is configured to apply to the proximal end portion of the blade (10) a force which is directed to a direction away from the hub (20) in the extending direction of the blade (10) so that the proximal end portion of the blade (10) and the blade side race (32) is separated when the spring element of the first jig (110) is being extended.

5. The phase change jig according to claim 4,
wherein the rotational axis of the hub (20) is tilted so that the rotational axis is higher on a side that is farther away from the power generator main body; wherein the blade (10) is inclined to a direction which goes away from the tower with respect to an imaginary plane which is perpendicular to the rotational axis of the hub (20) such that a position of the distal end portion of the blade (10) is farther from the tower than a position of the proximal end portion of the blade (10); and
wherein the second jig (120) is configured to be mounted on a side of the power generator main body in the connecting section.

6. The phase change jig according to claim 4,
wherein the hub side race (31) of the blade bearing (30) is fixed to the hub (20) using a fastening member; and
wherein the first jig (110) and the second jig (120) are configured to be fixed to the hub side race (31) by the fastening member.
